(19)

Europäisches
Patentamt

European
Patent Office

Office européen
des brevets

(11)  **EP 4 579 458 A1**

(12)  **EUROPEAN PATENT APPLICATION**

(43) Date of publication:
02.07.2025 Bulletin 2025/27

(21) Application number: 24215352.6

(22) Date of filing: 26.11.2024

(51) International Patent Classification (IPC):
*G06F 9/50* (2006.01)

(52) Cooperative Patent Classification (CPC):
**G06F 9/5011; G06F 9/5016**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 US 202318396390**

(71) Applicant: **INTEL Corporation
Santa Clara, CA 95054 (US)**

(72) Inventor: **CHEN, Shou
Portland, OR, 97229 (US)**

(74) Representative: **Samson & Partner Patentanwälte
mbB
Widenmayerstraße 6
80538 München (DE)**

(54) **DEVICE, METHOD AND SYSTEM FOR DETERMINING A CREDIT-BASED ACCESS TO A SHARED CIRCUIT RESOURCE**

(57)     Techniques and mechanisms for any of multiple processor circuits to be able to access a shared circuit resource. In an embodiment, processor circuits variously provide respective requests to access a resource of a computation circuit. A pool of requestor processor circuits is managed based on the access requests. For a pending access request, an amount of credit for the corresponding pool member accumulates at a rate which is based on the current pool size. For an access request which is being serviced, the amount of credit for the corresponding pool member is consumed at a relatively fast rate. Access to the resource is allocated based on the respective amounts of credit for each pool member. In another embodiment, a prioritized access request results in a transition from resource access allocation according to a credit-based scheme to resource access allocation according to a priority-based scheme.

FIG. 1

Processed by Luminess, 75001 PARIS (FR)

EP 4 579 458 A1

## Description

## BACKGROUND

### 1. Technical Field

This disclosure generally relates to processors and more particularly, but not exclusively, to the sharing of a computational resource among multiple processor circuits.

### 2. Background Art

In many computer systems, a co-processor is shared between multiple processor units for any of various reasons such as to enable the execution of additional sets of instructions on an as-needed basis. The sharing of such a co-processor often contributes to the efficient use of silicon area. However, system efficiency often depends in significant part on fairness in the allocating of access to the co-processor by the various processor units. In many instances, an unfair allocation scheme increases the possibility that one processing unit prevents the co-processor from performing tasks on behalf of any other of the processing units. Consequently, unfair allocation schemes contribute to overall execution latency in some multi-processor systems. As successive generations of multi-processor architectures continue to increase in number, variety, and capability, there is expected to be an increasing premium placed on improvements to how shared circuit resources are variously made available to different processors.

## BRIEF DESCRIPTION OF THE DRAWINGS

The various embodiments of the present invention are illustrated by way of example, and not by way of limitation, in the figures of the accompanying drawings and in which:

FIG. 1 is a block diagram illustrating features of a system 100 to determine an access to a resource of a computation circuit according to an embodiment.

FIG. 2 is a flow diagram illustrating features of a method to determine an access to a computation circuit resource according to an embodiment.

FIG. 3 is a flow diagram illustrating features of a method to manage credit information in aid of determining access to a computation circuit resource according to an embodiment.

FIG. 4 is a flow diagram illustrating features of a method to manage a pool of processor circuits which share access to a computation circuit resource according to an embodiment.

FIG. 5 is a flow diagram illustrating features of a method to assign a task to a computation circuit resource based on a current accumulation of credits by a processor circuit according to an embodiment.

FIG. 6 is a block diagram illustrating features of a system 600 to provide access to a computation circuit according to an embodiment.

FIG. 7 is a flow diagram illustrating features of a method to select a scheme according to which a computation circuit resource is to be accessed according to an embodiment.

FIG. 8 is a flow diagram illustrating features of a method to assign a task to a computation circuit resource based on a priority which corresponds to a processor circuit according to an embodiment.

FIG. 9 illustrates an exemplary system.

FIG. 10 illustrates a block diagram of an example processor that may have more than one core and an integrated memory controller.

FIG. 11A is a block diagram illustrating both an exemplary in-order pipeline and an exemplary register renaming, out-of-order issue/execution pipeline according to examples.

FIG. 11B is a block diagram illustrating both an exemplary example of an in-order architecture core and an exemplary register renaming, out-of-order issue/execution architecture core to be included in a processor according to examples.

## DETAILED DESCRIPTION

Embodiments discussed herein variously provide techniques and mechanisms for any of multiple processor circuits to be able to access a shared circuit resource. Under at least some conditions, such access is determined based on one or more processor circuits each being associated with a respective amount of credit.

In an embodiment, a first processor circuit, which has requested access to the shared circuit resource, accumulates credit while that first processor circuit is awaiting said access. For example, such credit accumulation is at a rate which is based on a current total number of one or more processor circuits which have current requests to access the shared resource. By contrast, the same (or another) processor circuit consumes - that is, looses - credit, at a relatively high rate, while the shared resource is performing a task on behalf of said processor circuit. In one such embodiment, a credit-based scheme is used to select an access request for servicing on behalf of a requesting processor circuit - e.g., wherein the selection is based on a determination that the requesting processor circuit is currently the most highly accredited processor circuit. Some embodiments variously transition between performing access allocation according to a credit-based scheme to performing access allocation according to an alternative scheme, such as a priority-based scheme.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including logic to allocate access to a shared circuit resource.

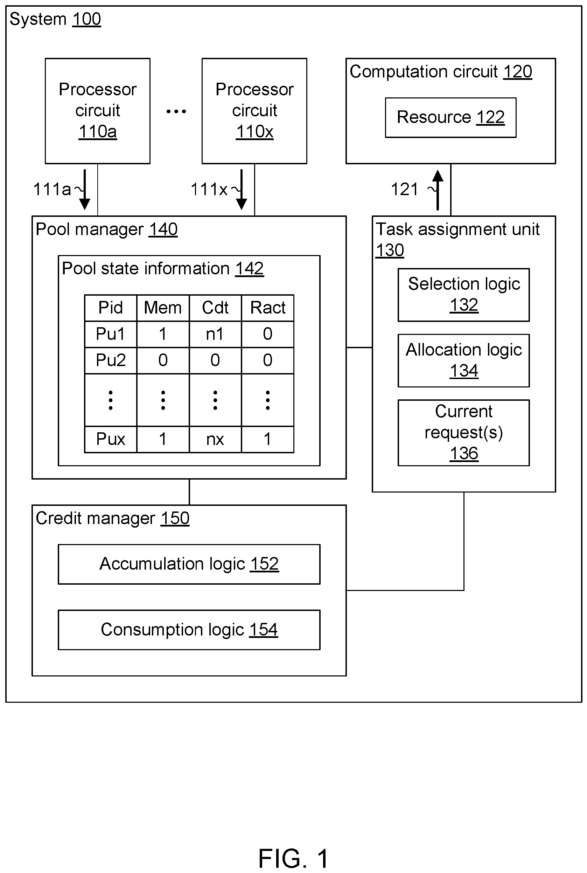

FIG. 1 shows a system 100 which determines access to a resource of a computation circuit according to an embodiment. The system 100 illustrates features of one example embodiment wherein a shared circuit resource is available to any of multiple processor circuits, wherein access to the circuit resource by one such processor circuit is allocated according to a credit-based scheme. When a given processor circuit is awaiting a requested access to the circuit resource, an amount of credit which is attributed to that processor circuit increases at a first rate which is based on a total number of the one or more processor circuits which are currently awaiting resource access. In one such embodiment, when access to the circuit resource is provided on behalf of said processor circuit, the amount of credit decreases at a second rate which, for example, is faster (i.e., has a greater magnitude) than the first rate.

As shown in FIG. 1, system 100 comprises multiple processor circuits (such as the illustrative processor circuits 110a, ..., 110x shown) which each comprise a respective one or more processor cores. By way of illustration and not limitation, one or more of processor circuits 110a, ..., 110x is each a respective one of a single-core, or multi-core, processing unit - e.g., wherein a given one such processing unit is a central processing unit (CPU). In another embodiment, some or all of processor circuits 110a, ..., 110x are different respective cores of the same processing unit. In various embodiments, some or all of processor circuits 110a, ..., 110x are on the same integrated circuit (IC) chip - e.g., wherein a network-on-chip (NoC) or a system-on-chip (SoC) comprises two or more of processor circuits 110a, ..., 110x. Alternatively or in addition, two or more of processor circuits 110a, ..., 110x are on different respective IC chips - e.g., including IC chips in the same packaged device, and/or IC chips of different respective packaged devices.

System 100 further comprise - or alternatively, accommodates coupling to - any of various types of circuits (referred to herein as "computation circuits") which are capable of providing computation functionality in support of a given one of processor circuits 110a, ..., 110x. By way of illustration and not limitation, computation circuit 120 comprises any of various suitable co-processors to perform floating-point (or other) arithmetic operations, graphics operations, signal processing operations, string processing operations, cryptographic operations, input/output (I/O) interface operations, formatting operations, machine learning operations, and/or the like. Alternatively or in addition, computation circuit 120 comprises any of various suitable accelerator circuits, such as a digital streaming accelerator (DSA). Alternatively or in addition, computation circuit 120 comprises any of various suitable graphics processing unit, for example. However, some embodiments are not limited to a particular computation circuit which is to be available for shared access by multiple processor circuits.

During operation of system 100, some or all of processor circuits 110a, ..., 110x each execute a respective one or more software processes - e.g., including an operating system (OS), one or more software applications, a virtual machine manager, one or more virtual machines, and/or the like. To facilitate such software execution, a given one of processor circuits 110a, ..., 110x (referred to herein generically as a processor circuit 110) explicitly or implicitly requests access to a resource 122 which is implemented with some or all of computation circuit 120. In an illustrative scenario according to one embodiment, processor circuits 110a, 110x variously submit respective requests 111a, 111x each to access computation circuit 120.

In an embodiment, system 100 comprises logic - e.g., comprising circuit hardware, firmware and/or executing software - to variously allocate access to resource 122 on behalf of processor circuits 110a, 110x (and, similarly, on behalf of the corresponding access requests 111a, 111x). Such access is allocated according to a credit-based scheme, wherein credit is variously attributed based on a total number of the current one or more processor circuits which each have a current request for such access. In the example embodiment shown, such logic comprises some or all of a task assignment unit 130, a pool manager 140, and a credit manager 150.

In one such embodiment, a given processor circuit 110 submits, to pool manager 140, a request (referred to herein as an "access request") to be allocated access to the shared resource 122 (also referred to herein as a "computation circuit resource" or, for brevity, simply a "resource"). In some embodiments, task assignment unit 130, pool manager 140, and credit manager 150 variously comprise one or more microcontrollers, state machines, application specific integrated circuits (ASICs), programmable gate arrays (PGAs) and/or any of various other types of circuitry which are suitable to service such an access request, at least in part, by assigning one or more tasks which are to be performed with the shared resource 122 of computation circuit 120.

An access request from a processor circuit 110 is a "current request" until the requested access to resource 122 has been completed - e.g., until each task assigned by task assignment unit 130 on behalf of the requesting processor circuit 110 has been completed with the shared resource 122. At a given time, a current request can be in either of two states, which are referred to herein as a "pending" state and an "active" state. An active request is a current access request for which resource 122 is currently performing a corresponding task. While one current access request is active, any other current access request is a "pending request" which, for example, is awaiting the assigning of a task to be performed with resource 122 on behalf of a corresponding processor circuit 110. When resource 122 has finished each task for a given access request, that access request is a "completed request," and is no longer current. To facilitate quick retrieval of task results, some embodiments notify an access requestor of a completed task even before all tasks for the access request in question have been performed.

To facilitate fair allocation of access to a shared computational circuit resource, pool manager 140 supports the managing of a pool of those one or more processor circuits, if any, which each correspond to (e.g., which have each provided) a respective access request that is current. The term "pool member" (or, for brevity, simply "member") refers herein to a processor circuit which corresponds to a current access request, and which thus currently belongs to the processor circuit pool (or simply "pool"). A given pool member corresponds to a respective access request at least insofar as the pool member generated (or otherwise caused the generation of) said access request - e.g., wherein the request is for an access to a shared resource on behalf of the corresponding pool member.

The term "pending member" refers herein to a pool member for which a corresponding access request (which was made by the member in question) is currently pending. The term "active member" refers herein to a pool member for which a corresponding access request is currently active. The term "pool size" (or, for brevity, simply "size") refers herein to a total number (N) of the current one or more members of a processor circuit pool. Over time, a pool size is subject to change - e.g., wherein processor circuits variously enter and leave the pool as their respective corresponding access requests are variously generated and completed.

Pool manager 140 comprises pool state information 142 which specifies or otherwise indicates which one or more processor circuits 110 (if any) are each a current pool member. Pool manager 140 further comprises circuitry and/or other suitable logic to regularly update pool state information 142 as access requests are variously generated and completed over time. Pool state information 142 is provided, for example, by any of a variety of one or more data structures (e.g., including a table) which are suitable to identify current pool members. In some embodiments, pool state information 142 (and/or other state information to be made available to task assignment unit 130 and/or credit manager 150) further includes other state information to facilitate the allocation of access to resource 122.

In the example embodiment shown, pool state information 142 comprises, or otherwise represents, entries which each correspond to a different respective one of the processor circuits 110a, ..., 110x. A given one such entry comprises, for example, a field (Pid) to provide an identifier of the corresponding processor circuit, and another field (Mem) to identify whether that corresponding processor circuit is currently a member of the pool. In one such embodiment, the given entry further comprises a field (Cdt) to provide a variable - referred to herein as a "credit variable" - for indicating an amount of credit which is currently (or, for example, was otherwise most recently) attributed to the corresponding processor circuit. Alternatively or in addition, the given entry further comprises another field (Ract) to identify whether the corresponding processor circuit is currently an active member or a pending member.

In an illustrative scenario according to one embodiment, a first entry of pool state information 142 comprises an identifier Pu1 for processor circuit 110a, a flag which is set to specify that processor circuit 110a is currently a pool member, an identifier n1 of an amount of credit ("credit amount" herein) which is currently attributed to processor circuit 110a, and another flag which is set to specify that processor circuit 110a is currently a pending member. Furthermore, a second entry of pool state information 142 comprises an identifier Pux for processor circuit 110x, a flag which is set to specify that processor circuit 110x is currently a pool member, an identifier nx of a credit amount which is currently attributed to processor circuit 110x, and another flag which is set to specify that processor circuit 110x is currently an active member. Although some embodiments are not limited in this regard, a third entry of pool state information 142 comprises an identifier Pu2 another processor circuit 110, and a flag which specifies that said other processor circuit 110 is not currently a pool member. In an alternative embodiment, entries of pool state information 142 are only for current pool members (i.e., rather than for any processor circuit which is not currently a pool member).

Credit manager 150 comprises any of various types of circuitry which are suitable to keep up-to-date state information which indicates a credit amount that is currently attributed to a given pool member (and thus, is also attributed to the access request which corresponds to that pool member). For example, credit manager 150 regularly - e.g., continuously, incrementally or otherwise - updates one or more credit variables which are each in a different respective Cdt field of pool state information 142.

In the example embodiment shown, credit manager 150 comprises accumulation logic 152 which determines, for a given credit variable, an amount by which that credit variable is to be increased or otherwise changed to indicate a greater credit amount. For example, a given credit amount is to be increased with accumulation logic 152 while the corresponding pool member is a pending pool member. In various embodiments, a given credit variable is updated once per cycle (also referred to herein as an "accreditation cycle" or an "evaluation cycle") in a sequence of such cycles for successively determining each credit amount. For example, a given one such cycle includes one or more cycles of a clock signal used to operate circuitry of system 100.

As used herein, a "credit accumulation rate" - or, for brevity, simply "accumulation rate" - refers to an additional amount by which the credit, attributed to one pool member, is to be increased per cycle. An accumulation rate for one pool member is based on a current size of the pool, in some embodiments. By way of illustration and not limitation, a "pool rate" is a total amount of all additional credit which, in a given cycle, is to be further attributed to the one or more pool members (or at least to the one or more pending pool members). For example, the pool rate is represented by K credit units, and N is a current size of the pool (where K is some positive number, and N is a non-negative integer). In one such embodiment, the one or more pool members (or at least the one or more pending pool members), in a given cycle, are each to be further attributed a respective portion of K credit units. For example, the one or more pool members (or at least the one or more pending pool members) are each to receive K/N credit units in a given cycle, in some embodiments.

In another embodiment, one or more pool members variously accumulate additional credit each at a different respective accumulation rate - e.g., wherein different rates are each based on the pool size and, for example, further based on a different respective weight factor (also referred to herein as a "scale factor"). In one such embodiment, some or all of the one or more pool members (and/or the respective access requests of such one or more pool members) each correspond to a respective factor which is used to weight how K credit units are variously distributed among pool members in a given cycle. For example, a given one such weight factor is based on an operational characteristic of the corresponding pool member - e.g., based on a quality of service to be provided with the pool member, a particular hardware thread capability of the pool member, and/or the like.

By way of illustration and not limitation, at least some pool members correspond to different respective weight values (e.g., values w1, w2,..., wx), wherein a total weight value Wtot is equal to a sum of said weight values.

In an illustrative scenario according to one such embodiment, the accumulation rate for one such pool member is proportional to (e.g., equal to) a product of the ratio K/N and a ratio of the corresponding weight value to the total weight value Wtot. For example, in one such embodiment, a first pool member, which corresponds to the weight value w1, accumulates credit at a first per cycle rate k1, wherein:

$$k1 \propto (K \cdot w1) / (N \cdot Wtot).$$

Alternatively or in addition, a second pool member, which corresponds to the weight value w2, accumulates credit at a second per cycle rate k2, wherein:

$$k2 \propto (K \cdot w2) / (N \cdot Wtot).$$

However, the accumulation of credit at different respective rates by various pending pool members is according to any of various additional or alternative suitable weighting schemes, in other embodiments.

Credit manager 150 further comprises consumption logic 154 which determines, for a given credit variable, an amount by which that credit variable is to be decreased or otherwise changed to indicate a lesser credit amount. In one such embodiment, a given credit amount is to be decreased while the corresponding pool member is an active pool member. As used herein, a "credit consumption rate" - or, for brevity, simply "consumption rate" - refers to an amount by which the credit, attributed to one pool member, is to be decreased per cycle.

In some embodiments, the credit amount for the active pool member during a given cycle is decreased at a consumption rate which is greater than the accumulation rate which that pool member would have when in a pending state. In one such embodiment, the consumption rate is independent of the pool size - e.g., wherein the credit amount for the active pool member changes by negative K (or "-K") credit units per cycle, and wherein the total credit amount for only the pending one or more pool members changes by positive K (or "+K") credit units per cycle. In an alternate embodiment, the consumption rate for the active pool member is dependent on the pool size - e.g., wherein the consumption rate is equal to [K·(1 - (1/N))] credit units, and wherein the accumulation rates for one or more pending pool members are each equal to (K/N) credit units. In some embodiments, the consumption rate is greater than (for example, is an integer multiple of) the [K·(1 - (1/N))] credit units rate - e.g., wherein access to multiple resources is being performed concurrently on behalf of the same active pool member. However, the consumption of credit by an active pool member is according to any of various additional or alternative schemes, in other embodiments.

Task assignment unit 130 illustrates any of various types of logic - e.g., including hardware (such as circuitry), firmware and/or executing software - which provide functionality to enable access to resource 122 on behalf of a given pool member. Such access is enabled, for example, by task assignment unit 130 assigning a task to be performed with resource 122, wherein the task is based on a current access request.

In various embodiments, task assignment unit 130 uses a credit-based scheme for identifying a pool member which is to be transitioned from a pending state to an active state. By way of illustration and not limitation, selection logic 132 of task assignment unit 130 provides functionality to select one pool member - from among all of (and, for example, only) the one or more current pool members - to be a next active pool member. In an embodiment, selecting a given pool member comprises selecting an access request which is from (or is otherwise on behalf of) that pool member. Such selection is performed, for example, based on selection logic 132 searching or otherwise accessing credit information (such as that provided in the Cdt fields of pool state information 142) to identify a "most accredited pool member" - i.e., the pool member which is currently attributed a greater amount of credit than is any other pool member.

In one such embodiment, selection logic 132 identifies the most accredited pool member to allocation logic 134 of task assignment unit 130. Allocation logic 134 keeps track of the one or more current access requests 136, wherein - responsive to selection logic 132 - allocation logic 134 searches the current request(s) 136 to identify the "most accredited request" - i.e., the access request which corresponds to the most accredited pool member. In an embodiment, a requested access comprises one or more execution cycles or an execution time period (e.g., a period of time to accommodate the one or more execution cycles). Alternatively or in addition, a requested access comprises some or all of a data streaming bandwidth, and/or an amount of time to use said data streaming bandwidth. However, some embodiments are not limited to the provisioning of a particular type of access to resource 122.

In an illustrative scenario according to one embodiment, where it is determined that most accredited request is currently a pending access request, task assignment unit 130 transitions resource 122 from performing a task for another access request to performing a different task for the most accredited request (which is to become the next active access request). For example, allocation logic 134 identifies a task to be performed on behalf of the most accredited access request. Based on such identification, task assignment unit 130 issues one or more communications (e.g., including the illustrative task assignment 121 shown) to suspend or otherwise stop a current task which is performed with resource 122, and further to resume, start or otherwise perform another task on behalf of the most accredited access request. In one such embodiment, allocation logic 134 (or other suitable logic of task assignment unit 130) further signals pool manager 140 to update one or more Ract fields of pool state information 142 - e.g., to indicate that a previously active access request (and a corresponding pool member) is now pending, and that a previously pending access request (and a corresponding pool member) is now active.

In another scenario, where it is instead determined that the active access request is the currently most accredited request, task assignment unit 130 foregoes transitioning resource 122 from performing the currently allocated task.

Instead task assignment unit 130 simply waits until a next evaluation cycle has completed so that the pool members' updated credits can be reviewed again to possibly identify a different pool member as being the most accredited one.

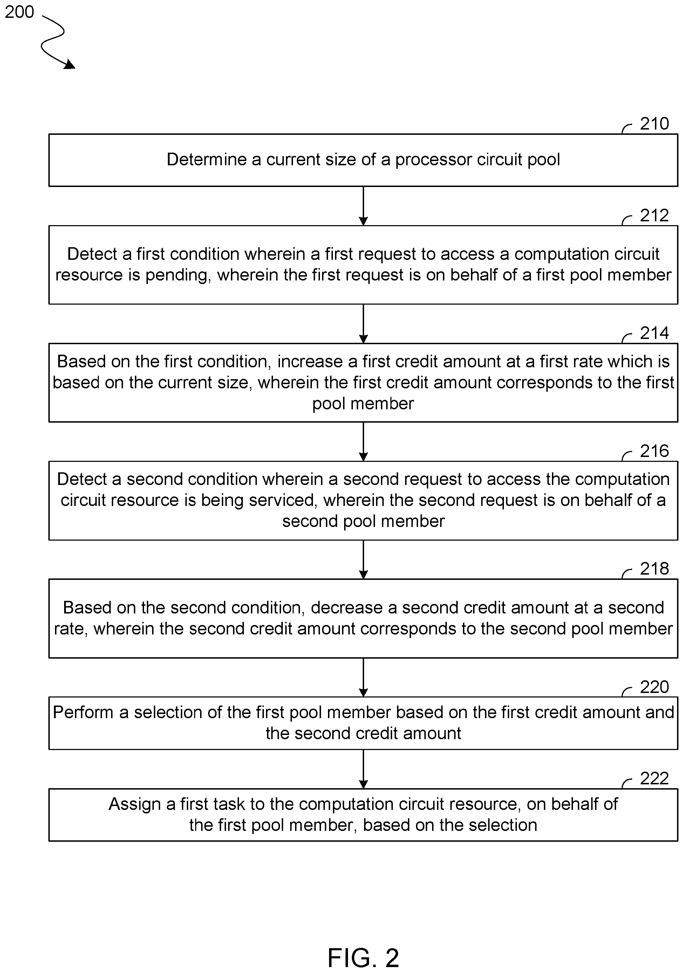

FIG. 2 shows a method 200 for determining an access to a computation circuit resource according to an embodiment. The method 200 illustrates one example of an embodiment wherein a task to be performed by a shared resource is assigned based on the respective amounts of credit which are variously attributed to the members of a processor circuit pool. For a given one pool member, the amount of credit attributed to that member increases, while a corresponding access request is pending, at a rate which is based on the size of the pool. Operations such as those of method 200 are performed with any of various combinations of suitable hardware (e.g., circuitry), firmware and/or executing software which, for example, provide some or all of the functionality of task assignment unit 130, pool manager 140, and/or credit manager 150.

As shown in FIG. 2, method 200 comprises (at 210) determining a current size of a pool of one or more processor circuits (if any) which are each currently requesting access to a shared resource of a computation circuit. By way of illustration and not limitation, the computation circuit comprises one of a co-processor, an accelerator (such as a digital streaming accelerator) or a graphics processor unit. In one such embodiment, the shared resource comprises execution cycles, execution time, streaming bandwidth and/or the like.

Method 200 further comprises (at 212) detecting a first condition wherein a first request to access a resource of the computation circuit (the first request on behalf of a first pool member) is currently pending - e.g., is not currently being serviced with the shared resource. Based on the first condition, method 200 (at 214) increases a first credit amount, which corresponds to the first pool member, at a first rate which is based on the current pool size. In one such embodiment, increasing the first credit amount at 214 comprises updating one or more credit variables which each correspond to a different respective pool member. In one such embodiment, the one or more credit variables are each increased at the same credit accumulation rate - such as the accumulation rate $(K/N)$ described herein with reference to system 100 - based on the corresponding one or more pool members each being a pending pool member. In some embodiments, a credit variable for a pending pool member (and accordingly, for its corresponding access request) is increased by method 200 until the pool member becomes the active pool member or, for example, until the credit variable reaches some predetermined value which represents a maximum possible amount of credit.

Method 200 further comprises (at 216) detecting a second condition wherein a second request to access the computation circuit resource (the second request is on behalf of a second pool member) is currently being serviced. Based on the second condition, method 200 (at 218) decreases a second credit amount at a second rate, wherein the second credit amount corresponds to the second pool member. In one such embodiment, the second credit amount is decreased at 218 at a credit consumption rate such as that which is described herein with reference to system 100 - e.g., wherein the credit consumption rate is independent of the pool size. In some embodiments, a credit variable for an active pool member (and accordingly, for its corresponding access request) is decreased by method 200 until the pool member becomes a pending pool member or, for example, until the credit variable reaches some predetermined value which represents a minimum possible amount of credit.

Method 200 further comprises (at 220) performing a selection of the first pool member - e.g., over the second pool member and any other current pool member - based on the first credit amount and the second credit amount. For example, the selection is performed at 220 based on a determination that the first pool member is currently the highest accredited pool member. Based on the selection at 220, method 200 (at 222) assigns a first task to the computation circuit resource on behalf of the first pool member.

In various embodiments, the allocating at 222 comprises transitioning the resource from performing a second task, on behalf of the second pool member, to performing the first task. In one embodiment, such transitioning is based on a determination that the second credit amount has fallen below the first credit amount. In various embodiments, such transitioning is additionally or alternatively performed based (for example) on a determination that the performance of the second task, with the shared resource, has reached or exceeded some threshold maximum time slice and/or other such limit. In another embodiment, such transitioning is additionally or alternatively performed based (for example) on a completion of the second task (e.g., the completion while the second pool member is the highest accredited pool member).

In various embodiments, method 200 further comprises operations (not shown) for transitioning between allocating resource access according to a credit-based scheme, and allocating resource access according to a priority-based scheme. In this particular context, "priority," "prioritization," "priority-based scheme" and related terms variously generally refer to a prioritization of a given pool member (and accordingly, prioritization of a corresponding access request), wherein said prioritization is distinguished from any which might be due to the credit amount which is attributed to said pool member. For example, in one such embodiment, a given pool member (or some other prioritization resource) is able to specify a priority to be given to the corresponding memory access request. The priority is, for example, one in a range of possible priority values - e.g., wherein a relatively high priority access request is to be selected, over a relatively low priority access request, for access to the computation circuit resource.

In an illustrative scenario according to one embodiment, a given pool member (of a corresponding access request) is assigned no priority - e.g., whereas one or more other pool members each have a respective prioritization. In one such embodiment, selection of an unprioritized access request, for access to a shared resource, is to be based on a credit amount for the corresponding pool member - e.g., wherein the selection is made after each current prioritized access request (if any) has been completed. However, in other embodiments, even though a prioritized access request is to be selected for servicing before (and/or accumulates credit at a higher rate than) an unprioritized access request, servicing of the prioritized access request still suspend when it runs out of credit.

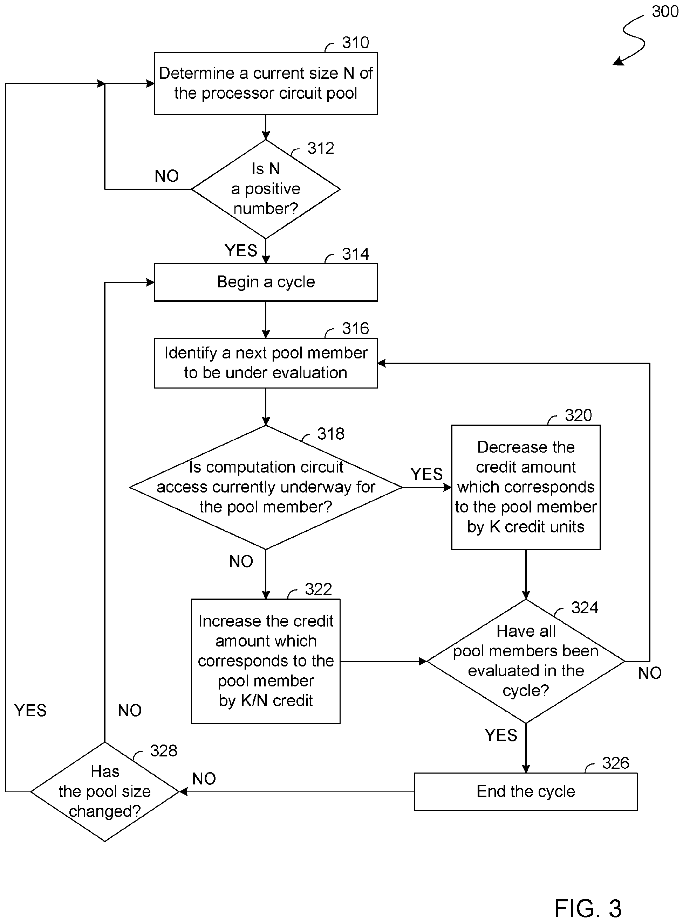

FIG. 3 shows a method 300 for managing credit information in aid of determining access to a computation circuit resource according to an embodiment. The method 300 illustrates one example of an embodiment wherein amounts of credits, each for a different respective member of a processor circuit pool, are kept up to date based at least in part on a current size of the processor circuit pool. Operations such as those of method 300 are performed with any of various combinations of suitable hardware (e.g., circuitry), firmware and/or executing software which, for example, provide some or all of the functionality credit manager 150 and/or other logic of system 100 - e.g., wherein method 200 includes, or is performed in combination with, operations of method 300.

As shown in FIG. 3, method 300 comprises (at 310) determining a current size N of the processor circuit pool, wherein N is an integer representing a total number of the one or more processor circuits which are currently a member of the pool. For example, the determining at 310 comprises counting the one or more processor circuits which have provided a respective current request to access a shared resource of a computation circuit. Method 300 further performs an evaluation (at 312) to determine whether N a positive number. Where it is determined at 312 that N is not a positive number (e.g., that N is equal to zero), method 300 performs a next instance of the determining at 310.

Where it is instead determined at 312 that N a positive number, method 300 (at 314) begins a set of operations (referred to herein as an "evaluation cycle" or, for brevity, merely a "cycle") to determine, for each processor which is currently a member of the pool, a change to the amount of credit which is attributed to that processor. In an embodiment, beginning the cycle comprises or otherwise results in an updating of reference information (e.g., comprising one or more flag bits, state variables and/or the like) to indicate that each current pool member has yet to be evaluated during said cycle. Subsequently, method 300 identifies (at 316) a next pool member - e.g., a first pool member - to be under evaluation during the current cycle.

Method 300 then performs another evaluation (at 318) to determine whether an access to the shared resource of the computation circuit is currently underway on behalf of the pool member which is currently under evaluation. Where it is determined at 318 that such access to the shared resource is currently underway, method 300 (at 320) decreases the amount of credit which corresponds to (e.g., which is attributed to) the pool member that is currently under evaluation. For example, a credit variable which corresponds to the member under evaluation (which, at 318, was determined to be the active pool member) is decreased or otherwise updated to indicate a lower amount of credit. By way of illustration and not limitation, the corresponding credit variable is decreased by some K credit units - or, for example, by $[K(N-1)/N]$ credit units. In one such embodiment, K other credits units (or, for example, $[K(N-1)/N]$ other credit units) are to be distributed among the other (pending) pool members, if any, in the same cycle.

Where it is instead determined at 318 that access to the shared resource, on behalf of the pool member under evaluation, is merely pending (and not actually underway), method 300 (at 322) increases the credit amount which corresponds to the pool member that is currently under evaluation. For example, a credit variable which corresponds to the member under evaluation is increased by an amount which is based on the current size N of the pool. In one such embodiment, the corresponding credit amount is increased by K/N credit units (or, for example, by $[K/(N-1)]$ credit units). Since this increasing at 320 will be performed one or more time in a given evaluation cycle, each time for a different respective pending pool member, the total amount of distributed credit in that given evaluation cycle will be K credit units (or, for example, $[K(N-1)/N]$ credit units), in some embodiments.

Method 300 further performs another evaluation (at 324) to determine - e.g., after the decreasing at 320 or the increasing at 322 - whether each pool member has been evaluated in the current cycle. Where it is determined at 324 that at least one current pool member has yet to be evaluated in the current cycle, method 300 performs a next instance of the identifying at 316. Where it is instead determined at 324 that each member of the pool has been evaluated in the current cycle, method 300 (at 326) performs one or more operations to end the cycle. In an embodiment, the one or more operations comprise (re)setting one or more flags and/or other suitable reference information to indicate that each current pool member is subject to being (re)evaluated in a next cycle of method 300.

Where it is determined during the current cycle is to be ended, method 300 further performs another evaluation (at 328) to determine whether the pool size has changed since the most recent instance of the determining at 310. Where it is determined at 328 that the pool size has changed, method 300 performs a next instance of the determining at 310. Where it is instead determined at 328 that the pool size remains unchanged since the most recent determining at 310, method 300 begins a next evaluation cycle at 314.

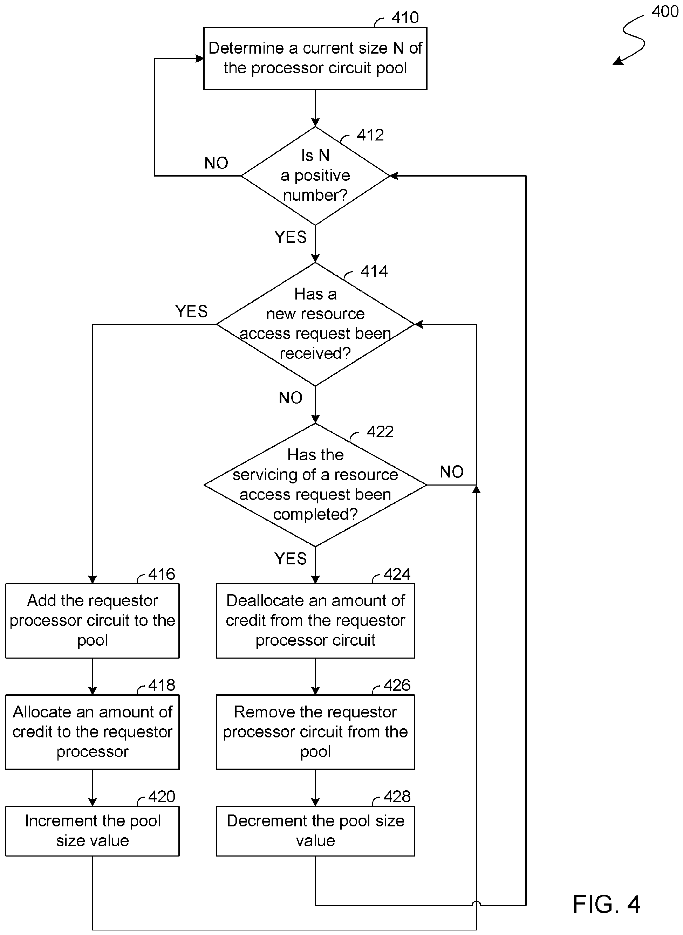

FIG. 4 shows a method 400 for managing a pool of processor circuits which share access to a computation circuit resource according to an embodiment. Method 400 illustrates one example of an embodiment which tracks a current size of a processor circuit pool, and allocates an initial amount of credit to a processor circuit which is to join said pool. Operations such as those of method 400 are performed with any of various combinations of suitable hardware (e.g., circuitry), firmware and/or executing software which, for example, provide some or all of the functionality of pool manager 140 and/or other logic of system 100 - e.g., wherein method 200 or method 300 includes, or is performed in combination with, operations of method 400.

As shown in FIG. 4, method 400 comprises (at 410) determining a current size N of the processor circuit pool. Method 400 further comprises performing an evaluation (at 412) to determine whether N is a positive number. The size N will change over time, and so the evaluation at 412 will eventually give a positive result after some first one or more access requests are identified at 410. Where it is determined at 412 that N is not a positive number (e.g., that N is equal to zero), method 400 performs a next instance of the determining at 410. Where it is instead determined at 412 that N is a positive number, method 400 performs another evaluation (at 414) to determine whether a request to access the computation circuit resource - the request from a requestor which is not currently in the pool - has been received since the most recent determining of the pool size at 412.

Where it is determined at 414 that such a new resource access request has been received, method 400 (at 416) adds the requestor processor circuit - i.e., the processor circuit which sent the resource access request in question - as a member of the processor circuit pool. For example, the adding at 416 comprises changing a register, flag and/or any of various other types to reference information which are suitable to classify a given processor circuit as currently being (or not being) a member of the pool. Furthermore, method 400 (at 418) allocates an amount of credit which is to be attributed to the requestor processor. Further still, method 400 (at 420) increments or otherwise changes a variable to indicate an increase to the pool size value N. After the pool size value is changed at 420, method 400 performs another instance of evaluating at 414.

Where it is instead determined at 414 that no new resource access request has been received, method 400 performs another evaluation (at 422) to determine whether the servicing of a request to access the computation circuit resource has been completed. Where it is determined at 422 that the servicing of a resource access request has not been completed (i.e., at least not since a most recent preceding evaluation at 422), method 400 (at 414) perform another instance of the evaluating at 414.

Where it is instead determined at 422 that the servicing of a resource access request has been completed, method 400 (at 424) deallocates from the requestor processor an amount of credit which is currently attributed to said requestor processor. Furthermore, method 400 (at 426) removes the requestor processor circuit from the pool, and (at 428) decrements or otherwise changes a variable to indicate a decrease to the pool size value N. After the pool size value is changed at 428, method 400 performs another instance of evaluating at 412.

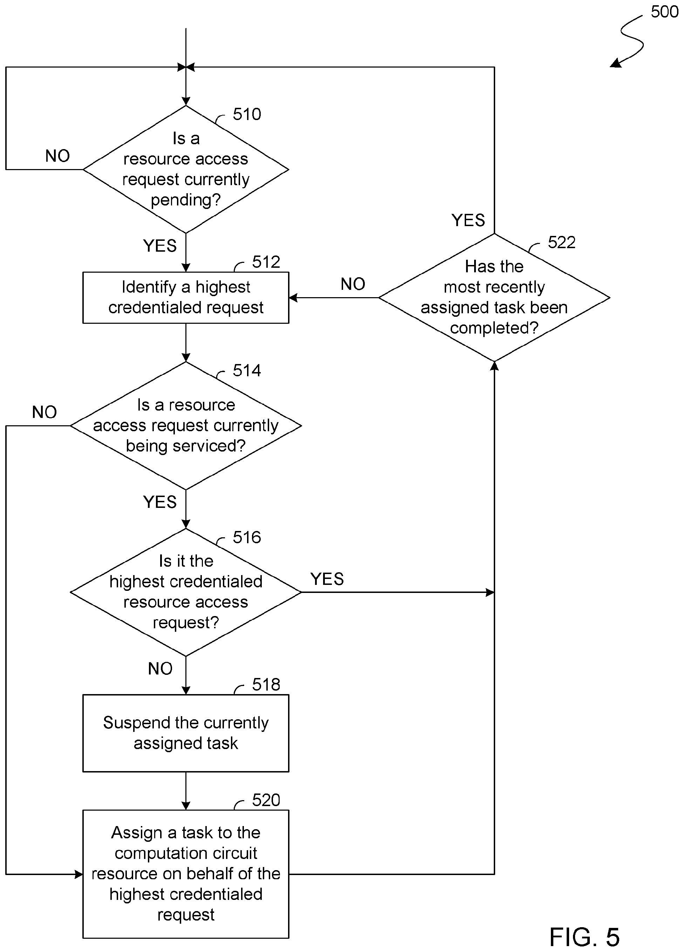

FIG. 5 shows a method 500 for assigning a task to a computation circuit resource based on a current accumulation of credits by a processor circuit according to an embodiment. Method 500 illustrates one example of an embodiment wherein tasks are variously assigned to a shared computation circuit resource based on one or more amounts of credit which are attributed each to a different respective pool member. Operations such as those of method 500 are performed with any of various combinations of suitable hardware (e.g., circuitry), firmware and/or executing software which, for example, provide some or all of the functionality of selection logic 132, allocation logic 134 and/or other logic of system 100. In some embodiments, one of methods 200, 300, 400 includes, or is performed in combination with, operations of method 500.

As shown in FIG. 5, method 500 comprises performing an evaluation (at 510) to determine whether any resource access request is currently pending. Where it is determined at 510 that no resource access request is currently pending, method 500 (at 510) performs a next instance of the evaluating at 510. Where it is instead determined at 510 that there is some pending resource access request, method 500 (at 512) identifies a highest credentialed access request - i.e., the access request from the processing unit which, of all current pool members, is currently attributed with the greatest amount of credit.

Method 500 then performs an evaluation (at 514) to determine whether any resource access request is currently being serviced - e.g., by determining whether there is some task which is currently being performed, with the computation circuit resource, on behalf of a pool member. Where it is determined at 514 that no such request is currently being serviced, method 500 (at 520) assigns a task to the computation circuit resource on behalf of the highest credentialed request, as identified most recently at 512.

Where it is instead determined at 514 that one such request is currently being serviced, method 500 performs another evaluation (at 516) to determine whether the request which is currently being serviced is the highest credentialed request, as identified most recently at 512. Where it is determined at 516 that a lesser credentialed request is currently being serviced, method 500 (at 518) suspend the task which is currently assigned to the resource - i.e., the task to service that lesser credentialed request. Subsequently (at 520), method 500 assigns another task to the computation circuit resource on behalf of the highest credentialed request, as identified most recently at 512.

After the assigning at 520 - or where it is instead determined at 516 that the highest credentialed request is currently being serviced - method 500 (at 522) performs another evaluation to determine whether the task most recently assigned to the resource has been completed. Where it is determined at 522 that the most recently assigned task has been completed, method 500 performs a next instance of the evaluating at 510. Where it is instead determined at 522 that the most recently assigned task has not yet been completed, method 500 performs a next instance of the identifying at 512.

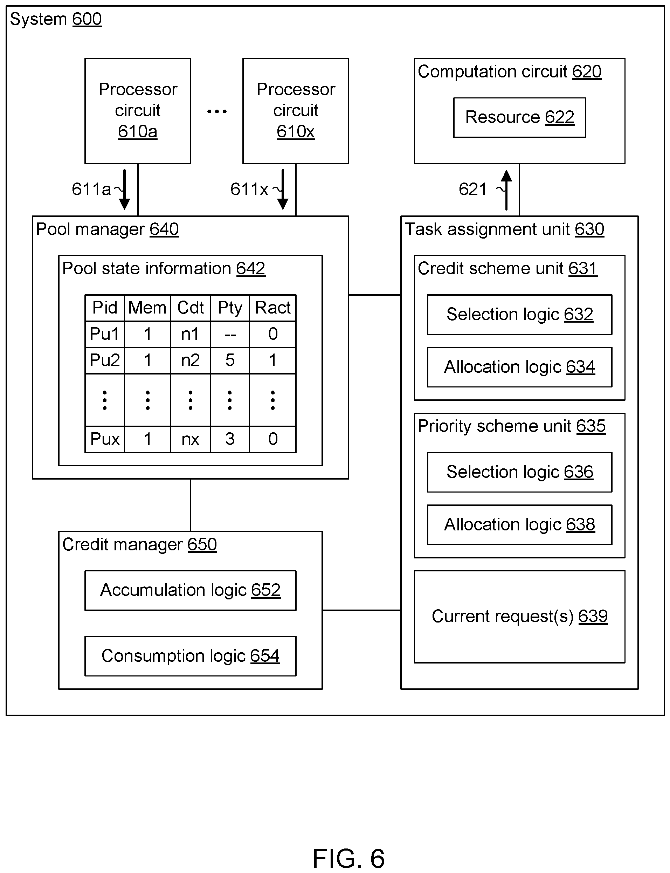

FIG. 6 shows a system 600 which provides access to a computation circuit according to an embodiment. System 600 illustrates features of one example embodiment with which a shared circuit resource is accessed according to either one of a credit-based scheme or a priority-based scheme. In some embodiments, system 600 provides functionality such as that of system 100 - e.g., wherein operations of one or more of methods 200, 300, 400, 500 are performed with some or all of system 600.

As shown in FIG. 6, system 600 comprises processor circuits - such as the illustrative processor circuits 610a, ..., 610x shown - and a computation circuit 620, wherein a resource 622 of computation circuit 620 is available to be variously accessed by the processor circuits 610a, ..., 610x at different times. In one such embodiment, the processor circuits 610a, ..., 610x (also referred to herein as "processor circuits 610" collectively, and each as a "processor circuit 610" generically) correspond functionally to processor circuits 110 - e.g., wherein resource 622 comprises features of resource 122. In an illustrative scenario according to one embodiment, processor circuits 610a and 610x generate, or otherwise contribute to the communication of, requests 611a and 611x (respectively) to access resource 622.

To facilitate a fair allocation of access to resource 622 by processor circuits 610, system 600 further comprises a task assignment unit 630, a pool manager 640, and a credit manager 650 which (for example) variously provide functionality such as that of computation circuit 120, task assignment unit 130, pool manager 140, and credit manager 150, respectively. By way of illustration and not limitation, pool manager 640 comprises, is coupled to access, or otherwise operates based on, pool state information 642 which (for example) has some or all of the features of pool state information 142. Alternatively or in addition, credit manager 650 comprises accumulation logic 652 and consumption logic 654 which (for example) variously provide functionality such as that of accumulation logic 152 and consumption logic 154, respectively. Alternatively or in addition, a credit scheme unit 631 of task assignment unit 630 comprises selection logic 632 and allocation logic 634 which (for example) variously provide functionality such as that of selection logic 132, and allocation logic 134, respectively. Task assignment unit 630 provided functionality to variously assign tasks to be performed with resource 622, where said tasks are each to service a respective one of one or more current requests 639 to access 622 on behalf of a respective processor circuit 610.

In an embodiment, a given processor circuit 610 (or other suitable logic of system 600) provides functionality to identify a corresponding access request as being associated with any of various possible priority levels. An access request which is given a relatively high prioritization is to be selected over another access request (if any) which, for example, is given lower prioritization, or no prioritization. Such prioritization of an access request is to be distinguished, for example, from a credit amount which is attributed to said access request. For example, such a credit amount is subject to changing over time while the access request is current, whereas a prioritization level (if any) which is given to an access request is to remain the same over time, in some embodiments.

A priority level is determined (for example) based on a type of execution thread which generates or is otherwise associated with the access request in question. Alternatively or in addition, a priority level is provided based on a quality of service which is to be provided with a given processor circuit. However, some embodiments are not limited with respect to the particular basis on which a prioritization level (if any) is associated with a given access request. The term "prioritized access request" (or, for brevity, "prioritized request") refers herein to an access request which is associated with some level of prioritization. The term "prioritized pool member" refers herein to a pool member which generates, or otherwise contributes to the communication of, a prioritized access request.

In various embodiments, task assignment unit 630 provides functionality to transition between allocating access to resource 622 according to a credit-based scheme, and allocating access to resource 622 according to a priority-based scheme. By way of illustration and not limitation, task assignment unit 630 further comprises a priority scheme unit 635 which includes selection logic 636 and allocation logic 638.

Selection logic 636 provides functionality to select one pool member to be a next active pool member - e.g., wherein the selection is from among all of (and, for example, only) the one or more current pool members, if any, which are prioritized. In an embodiment, selecting a given prioritized pool member comprises selecting a prioritized access request which is from (or is otherwise on behalf of) that pool member. Such selection is performed, for example, based on selection logic 636 searching or otherwise accessing prioritization information (such as that provided in the Pty fields of pool state information 642) to identify a "most prioritized pool member" - i.e., the pool member which is currently attributed a higher level of priority than is any other pool member.

In one such embodiment, selection logic 636 identifies the most prioritized pool member to allocation logic 638 of priority scheme unit 635. Allocation logic 638 (e.g., in combination with allocation logic 634) helps keeps track of the one or more current access requests 639, wherein - responsive to selection logic 636 - allocation logic 638 searches the current request(s) 639 to identify a "most prioritized request" - i.e., the access request which corresponds to the most prioritized pool member. In some situations wherein at least one of the current requests 639 is prioritized, allocation logic 638 signals task assignment unit 630 to participate in one or more communications (e.g., comprising the illustrative task assignment 621 shown) to assign a task to be performed with resource 622 to service the most prioritized access request. By contrast, in some alternative situations wherein none of the current requests 639 is prioritized, allocation logic 634 instead signals task assignment unit 630 to assign a task to be performed with resource 622 to service the most accredited access request.

In an illustrative scenario according to one embodiment, a first entry of pool state information 642 comprises an identifier Pu1 for processor circuit 610a, a member (Mem) flag which is set to specify that processor circuit 610a is currently a pool member, an identifier n1 of a credit amount (Cdt) which is currently attributed to processor circuit 610a, a priority (Pty) value which does not identify any possible level of priority, and an activity (Ract) flag which is set to specify that processor circuit 610a is currently a pending member. Furthermore, a second entry of pool state information 642 comprises an identifier Pux for processor circuit 610x, a Mem flag which is set to specify that processor circuit 610x is currently a pool member, an identifier nx of a credit amount which is currently attributed to processor circuit 610x, a priority (Pty) value which indicates a level 3 prioritization, and a Ract flag which is set to specify that processor circuit 610x is currently a pending member. Further still, a third entry of pool state information 642 comprises an identifier Pu2 for a third processor circuit (not shown), a Mem flag which is set to specify that said third processor circuit is currently a pool member, an identifier n2 of a credit amount which is currently attributed to said third processor circuit, a priority (Pty) value which indicates a level 5 prioritization, and a Ract flag which is set to specify that the third processor circuit is currently an active member.

At such a time in this scenario, task allocation with priority scheme unit 635 (e.g., rather than with credit scheme unit 631) is performed based on a determination by task assignment unit 630 at at least one current access request is prioritized - e.g., wherein the determination is based on the Pty fields of the entries in pool state information 642. Since the third processor circuit is the highest prioritized pool member, and since processor circuit 110a is not a prioritized pool member, priority scheme unit 635 determines that task assignment unit 630 is to assign a first task for resource 622 to perform on behalf of the third processor circuit.

Subsequently, at some other time after the first task is completed, priority scheme unit 635 determines that task assignment unit 630 is to assign a second task for resource 622 to perform on behalf of processor circuit 110x (i.e., when processor circuit 110x is the highest prioritized pool member). Subsequently, at some other time after the first task is completed, credit scheme unit 631 determines that task assignment unit 630 is to assign a second task for resource 622 to perform on behalf of processor circuit 110a (i.e., when no other access request is prioritized, and when processor circuit 110a is a highest accredited pool member).

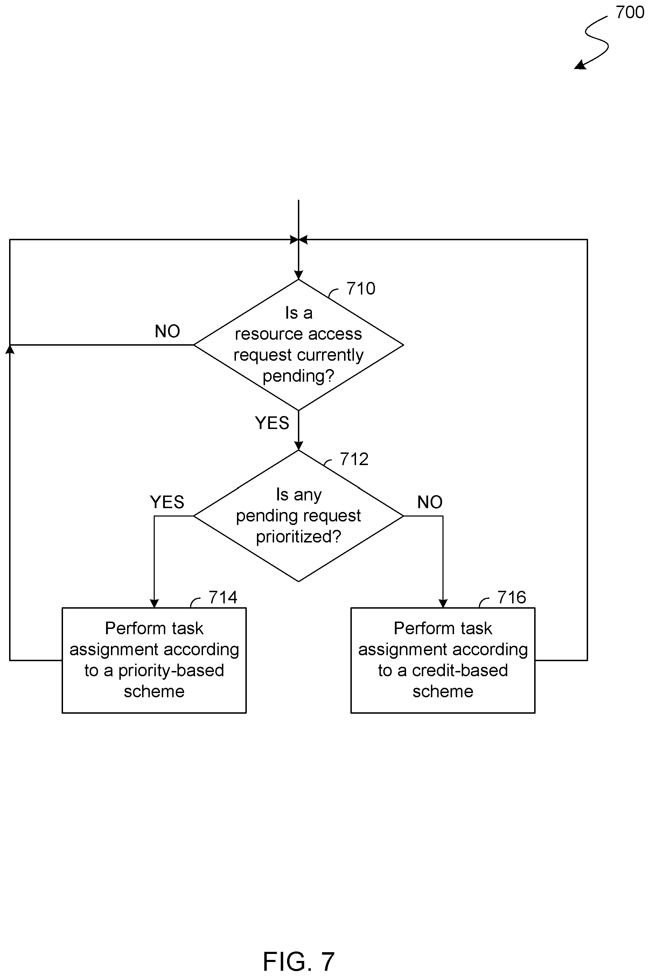

FIG. 7 shows a method 700 for selecting a scheme according to which a computation circuit resource is to be accessed according to an embodiment. Method 700 illustrates one example of an embodiment wherein a prioritization basis for task assignment is distinct from, and takes precedence over, an accreditation basis for task assignment. Operations such as those of method 700 are performed with any of various combinations of suitable hardware (e.g., circuitry), firmware and/or executing software which, for example, provide some or all of the functionality of method 600. In some embodiments, method 200 includes, or is otherwise performed in combination with, some or all operations of method 700.

As shown in FIG. 7, method 700 comprises performing an evaluation (at 710) to determine whether any resource access request is currently pending. Where it is determined at 710 that no resource access request is currently pending, method 700 performs a next instance of the determining at 710. Where it is instead determined at 710 that at least one resource access request is currently pending, method 700 performs another evaluation (at 712) to determine whether any currently pending request is a prioritized request.

Where it is determined at 712 that no currently pending request is a prioritized request, method 700 (at 716) performs task assignment according to a credit-based scheme. By way of illustration and not limitation, the task assignment performed at 716 comprises some or all of the features of method 300 - e.g., wherein at least one task is assigned at 716 based on an amount of credit which is currently attributed to a corresponding pool member. In one such embodiment, the assigning at 716 comprises performing method 300 until a receipt of a new prioritized access request results in such performing being terminated or otherwise suspended at least temporarily.

Where it is instead determined at 712 that at least one currently pending request is a prioritized request, method 700 (at 714) performs task assignment according to a priority-based scheme. By way of illustration and not limitation, the task assignment performed at 714 comprises some or all of the features of method 800 - e.g., wherein at least one task is assigned at 714 based on a level of priority which a pool member (or other suitable agent) assigned to a corresponding access request. In one such embodiment, the assigning at 714 comprises performing method 800 until no other current access request is prioritized. After the priority-based task assignment at 714, or after the credit-based task assignment at 716, method 700 performs a next instance of the evaluating at 710.

In various embodiments, credit accumulation and/or credit consumption changes due to a transition between the allocating of resource access according to a credit-based scheme, and the allocating of resource access according to a priority-based scheme. For example, during priority-based access allocation, credit accrual is relatively better for mitigating the possibility that a given prioritized access request would exhaust its corresponding credit amount. By way of illustration and not limitation, during priority-based access allocation (at 714, for example), a relatively high priority access request accumulates credit at a greater rate than does a relatively low priority access request. In one such embodiment, access requests which have the same prioritization accumulate additional credit at the same rate. Alternatively or in addition, a non-prioritized (and pending) access request stops accumulating additional credit, or at least accumulates additional credit at a rate which is less than that for any prioritized access request. Additionally or alternatively, a prioritized access request is to be selected for servicing before (and/or accumulates credit at a higher rate than) an unprioritized access request, but servicing of that prioritized access request still suspend when it runs out of credit.

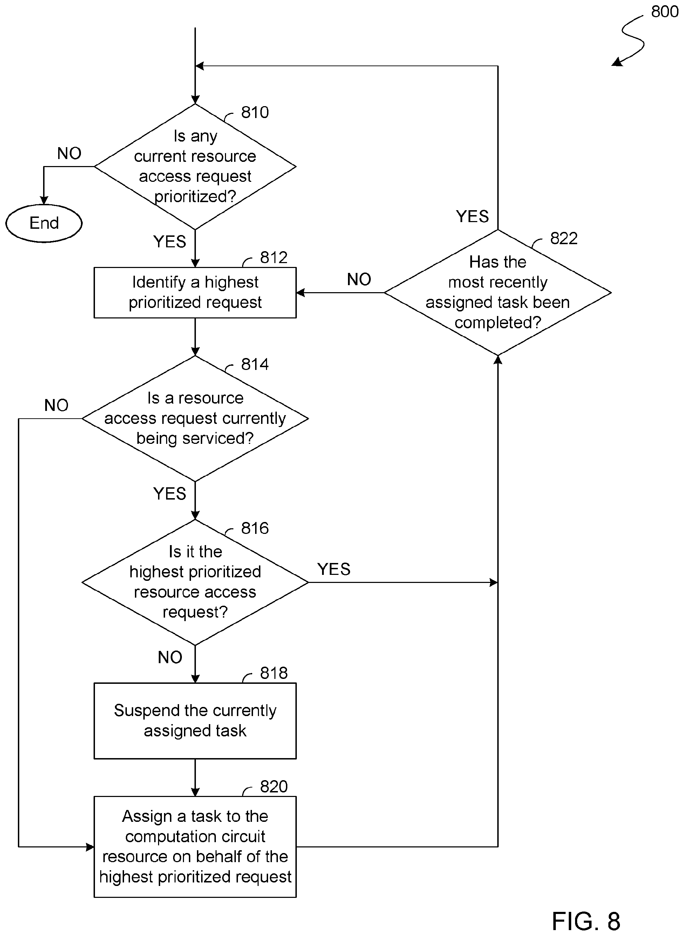

FIG. 8 shows a method 800 for assigning a task to a computation circuit resource based on a priority which corresponds to a processor circuit according to an embodiment. Method 800 illustrates one example of an embodiment wherein a resource access request - i.e., a request to access a computation circuit resource which is shared by each member of a processor circuit pool - has a prioritization which is a basis according to which a task is assigned to the shared resource. Operations such as those of method 800 are performed with any of various combinations of suitable hardware (e.g., circuitry), firmware and/or executing software which, for example, provide some or all of the functionality of priority scheme unit 635 and/or other circuitry of system 600.

As shown in FIG. 8, method 800 comprises (at 810) performing an evaluation to determine whether at least one current resource access request is prioritized. Where it is determined at 810 that no current resource access request is prioritized, method 800 ends (e.g., wherein task assignment returns to being performed on a credit-based scheme). Where it is instead determined at 810 that at least one current resource access request is prioritized, method 800 (at 812) identifies the highest prioritized one of the one or more current prioritized requests.

In one such embodiment, where multiple access requests each have the same prioritization, the identifying at 812 comprises selecting from among such multiple access requests on some other criteria, such as amounts of credit attributed to the corresponding pool members, an order in which the multiple access requests were received, and/or the like. After the identifying at 812, method 800 performs an evaluation (at 814) to determine whether any request to access a shared computation circuit resource, on behalf of a pool member, is currently being serviced. Where it is determined at 814 that no such access request is currently being serviced, method 800 (at 820) assigns a task to the shared computation circuit resource on behalf of the highest prioritized request.

Where it is instead determined at 814 that an access request is currently being serviced, method 800 performs another evaluation (at 816) to determine whether the currently serviced request is the highest prioritized request. Where it is determined at 816 that the currently serviced request is one other than the highest prioritized request, method 800 (at 818) terminates or otherwise suspends the task which is currently assigned to the shared resource. After such suspending, method 800 (at 820) assigns another task to the shared resource on behalf of the highest prioritized request.

After the assigning at 820 (or where it is instead determined at 816 that the currently serviced request is the highest prioritized request), method 800 performs another evaluation (at 822) to determine whether the most recently assigned task has been completed. Where it is determined at 822 that the most recently assigned task has been completed, method 800 performs a next instance of the evaluating at 810. Where it is instead determined at 822 that the most recently assigned task is not yet completed, method 800 (at 812) performs a next instance of the identifying at 812.

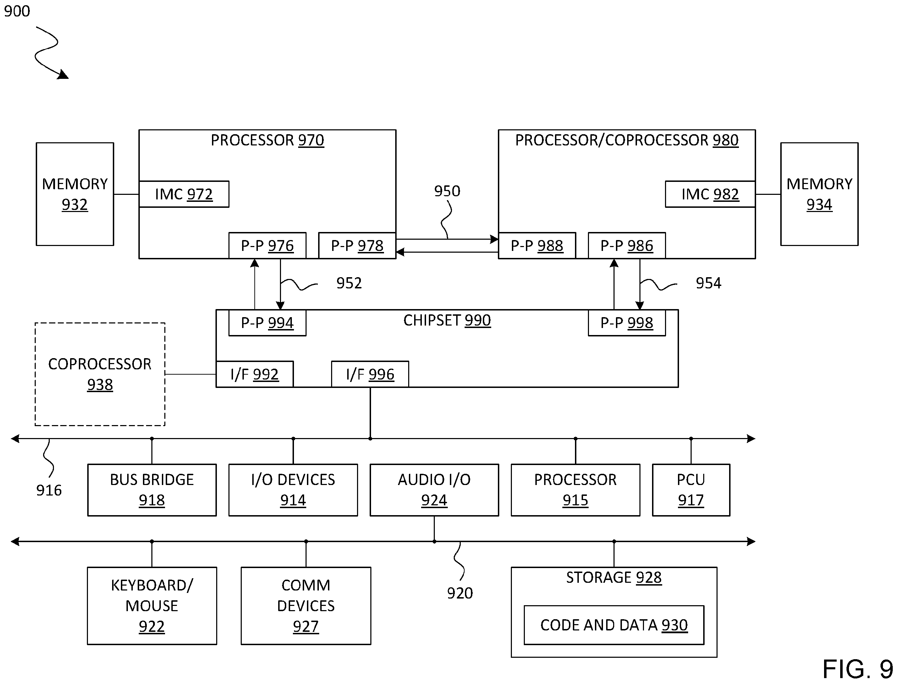

FIG. 9 illustrates an exemplary system. Multiprocessor system 900 is a point-to-point interconnect system and includes a plurality of processors including a first processor 970 and a second processor 980 coupled via a point-to-point interconnect 950. In some examples, the first processor 970 and the second processor 980 are homogeneous. In some examples, first processor 970 and the second processor 980 are heterogenous. Though the exemplary system 900 is shown to have two processors, the system may have three or more processors, or may be a single processor system.

Processors 970 and 980 are shown including integrated memory controller (IMC) circuitry 972 and 982, respectively. Processor 970 also includes as part of its interconnect controller point-to-point (P-P) interfaces 976 and 978; similarly, second processor 980 includes P-P interfaces 986 and 988. Processors 970, 980 may exchange information via the point-to-point (P-P) interconnect 950 using P-P interface circuits 978, 988. IMCs 972 and 982 couple the processors 970, 980 to respective memories, namely a memory 932 and a memory 934, which may be portions of main memory locally attached to the respective processors.

Processors 970, 980 may each exchange information with a chipset 990 via individual P-P interconnects 952, 954 using point to point interface circuits 976, 994, 986, 998. Chipset 990 may optionally exchange information with a coprocessor 938 via an interface 992. In some examples, the coprocessor 938 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 970, 980 or outside of both processors, yet connected with the processors via P-P interconnect, such that either or both processors' local cache information may be stored in the shared cache if a processor is placed into a low power mode.

Chipset 990 may be coupled to a first interconnect 916 via an interface 996. In some examples, first interconnect 916 may be a Peripheral Component Interconnect (PCI) interconnect, or an interconnect such as a PCI Express interconnect or another I/O interconnect. In some examples, one of the interconnects couples to a power control unit (PCU) 917, which may include circuitry, software, and/or firmware to perform power management operations with regard to the processors 970, 980 and/or co-processor 938. PCU 917 provides control information to a voltage regulator (not shown) to cause the voltage regulator to generate the appropriate regulated voltage. PCU 917 also provides control information to control the operating voltage generated. In various examples, PCU 917 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 917 is illustrated as being present as logic separate from the processor 970 and/or processor 980. In other cases, PCU 917 may execute on a given one or more of cores (not shown) of processor 970 or 980. In some cases, PCU 917 may be implemented as a microcontroller (dedicated or general-purpose) or other control logic configured to execute its own dedicated power management code, sometimes referred to as P-code. In yet other examples, power management operations to be performed by PCU 917 may be implemented externally to a processor, such as by way of a separate power management integrated circuit (PMIC) or another component external to the processor. In yet other examples, power management operations to be performed by PCU 917 may be implemented within BIOS or other system software.

Various I/O devices 914 may be coupled to first interconnect 916, along with a bus bridge 918 which couples first interconnect 916 to a second interconnect 920. In some examples, one or more additional processor(s) 915, such as coprocessors, high-throughput many integrated core (MIC) processors, GPGPUs, accelerators (such as graphics accelerators or digital signal processing (DSP) units), field programmable gate arrays (FPGAs), or any other processor, are coupled to first interconnect 916. In some examples, second interconnect 920 may be a low pin count (LPC) interconnect. Various devices may be coupled to second interconnect 920 including, for example, a keyboard and/or mouse 922, communication devices 927 and a storage circuitry 928. Storage circuitry 928 may be one or more non-transitory machine-readable storage media as described below, such as a disk drive or other mass storage device which may include instructions/code and data 930 in some examples. Further, an audio I/O 924 may be coupled to second interconnect 920. Note that other architectures than the point-to-point architecture described above are possible. For example, instead of the point-to-point architecture, a system such as multi-processor system 900 may implement a multi-drop interconnect or other such architecture.

Exemplary Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may include on the same die as the described CPU (sometimes referred to as the application core(s) or application processor(s)), the above described coprocessor, and additional functionality. Exemplary core architectures are described next, followed by descriptions of exemplary processors and computer architectures.

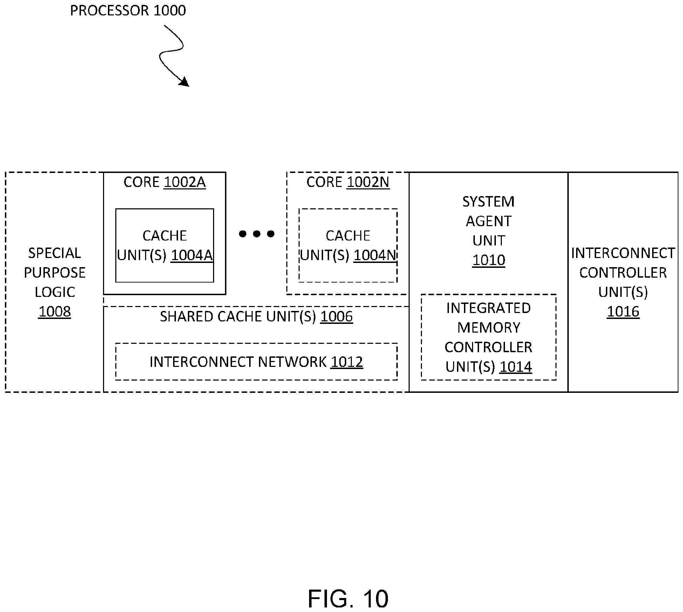

FIG. 10 illustrates a block diagram of an example processor 1000 that may have more than one core and an integrated memory controller. The solid lined boxes illustrate a processor 1000 with a single core 1002A, a system agent unit circuitry 1010, a set of one or more interconnect controller unit(s) circuitry 1016, while the optional addition of the dashed lined boxes illustrates an alternative processor 1000 with multiple cores 1002A-N, a set of one or more integrated memory controller unit(s) circuitry 1014 in the system agent unit circuitry 1010, and special purpose logic 1008, as well as a set of one or more interconnect controller units circuitry 1016. Note that the processor 1000 may be one of the processors 970 or 980, or co-processor 938 or 915 of FIG. 9.

Thus, different implementations of the processor 1000 may include: 1) a CPU with the special purpose logic 1008 being integrated graphics and/or scientific (throughput) logic (which may include one or more cores, not shown), and the cores 1002A-N being one or more general purpose cores (e.g., general purpose in-order cores, general purpose out-of-order cores, or a combination of the two); 2) a coprocessor with the cores 1002A-N being a large number of special purpose cores intended primarily for graphics and/or scientific (throughput); and 3) a coprocessor with the cores 1002A-N being a large number of general purpose in-order cores. Thus, the processor 1000 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1000 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1004A-N within the cores 1002A-N, a set of one or more shared cache unit(s) circuitry 1006, and external memory (not shown) coupled to the set of integrated memory controller unit(s) circuitry 1014. The set of one or more shared cache unit(s) circuitry 1006 may include one or more mid-level caches, such as level 2 (L2), level 3 (L3), level 4 (L4), or other levels of cache, such as a last level cache (LLC), and/or combinations thereof. While in some examples ring-based interconnect network circuitry 1012 interconnects the special purpose logic 1008 (e.g., integrated graphics logic), the set of shared cache unit(s) circuitry 1006, and the system agent unit circuitry 1010, alternative examples use any number of well-known techniques for interconnecting such units. In some examples, coherency is maintained between one or more of the shared cache unit(s) circuitry 1006 and cores 1002A-N.

In some examples, one or more of the cores 1002A-N are capable of multi-threading. The system agent unit circuitry 1010 includes those components coordinating and operating cores 1002A-N. The system agent unit circuitry 1010 may include, for example, power control unit (PCU) circuitry and/or display unit circuitry (not shown). The PCU may be or may include logic and components needed for regulating the power state of the cores 1002A-N and/or the special purpose logic 1008 (e.g., integrated graphics logic). The display unit circuitry is for driving one or more externally connected displays.

The cores 1002A-N may be homogenous in terms of instruction set architecture (ISA). Alternatively, the cores 1002A-N may be heterogeneous in terms of ISA; that is, a subset of the cores 1002A-N may be capable of executing an ISA, while other cores may be capable of executing only a subset of that ISA or another ISA.

Exemplary Core Architectures -In-order and out-of-order core block diagram.

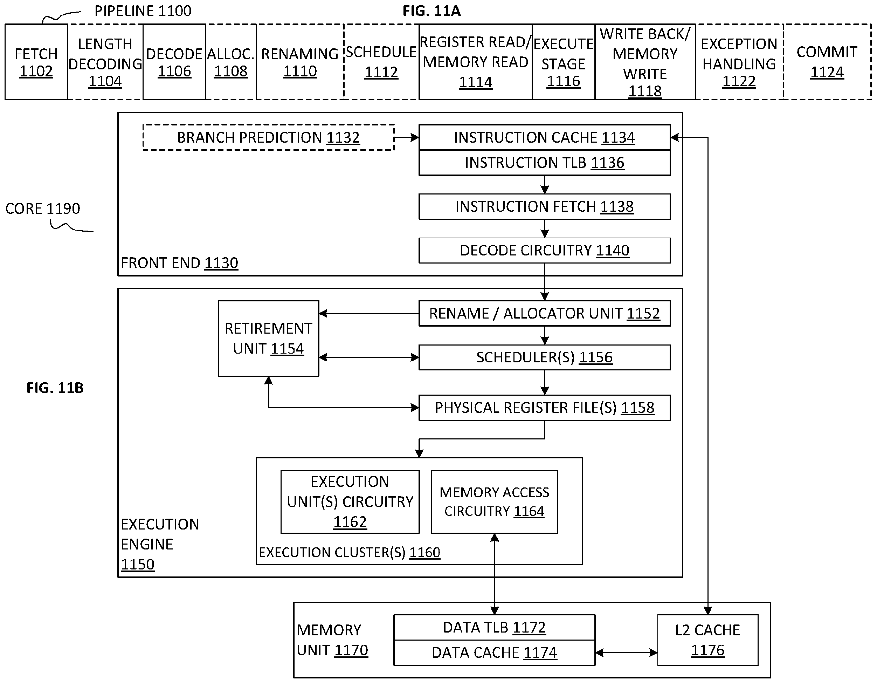

FIG. 11A is a block diagram illustrating both an exemplary in-order pipeline and an exemplary register renaming, out-of-order issue/execution pipeline according to examples. FIG. 11B is a block diagram illustrating both an exemplary example of an in-order architecture core and an exemplary register renaming, out-of-order issue/execution architecture core to be included in a processor according to examples. The solid lined boxes in FIGS. 11A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 11A, a processor pipeline 1100 includes a fetch stage 1102, an optional length decoding stage 1104, a decode stage 1106, an optional allocation (Alloc) stage 1108, an optional renaming stage 1110, a schedule (also known as a dispatch or issue) stage 1112, an optional register read/memory read stage 1114, an execute stage 1116, a write back/memory write stage 1118, an optional exception handling stage 1122, and an optional commit stage 1124. One or more operations can be performed in each of these processor pipeline stages. For example, during the fetch stage 1102, one or more instructions are fetched from instruction memory, and during the decode stage 1106, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1106 and the register read/memory read stage 1114 may be combined into one pipeline stage. In one example, during the execute stage 1116, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 11B may implement the pipeline 1100 as follows: 1) the instruction fetch circuitry 1138 performs the fetch and length decoding stages 1102 and 1104; 2) the decode circuitry 1140 performs the decode stage 1106; 3) the rename/allocator unit circuitry 1152 performs the allocation stage 1108 and renaming stage 1110; 4) the scheduler(s) circuitry 1156 performs the schedule stage 1112; 5) the physical register file(s) circuitry 1158 and the memory unit circuitry 1170 perform the register read/memory read stage 1114; the execution cluster(s) 1160 perform the execute stage 1116; 6) the memory unit circuitry 1170 and the physical register file(s) circuitry 1158 perform the write back/memory write stage 1118; 7) various circuitry may be involved in the exception handling stage 1122; and 8) the retirement unit circuitry 1154 and the physical register file(s) circuitry 1158 perform the commit stage 1124.

FIG. 11B shows a processor core 1190 including front-end unit circuitry 1130 coupled to an execution engine unit circuitry 1150, and both are coupled to a memory unit circuitry 1170. The core 1190 may be a reduced instruction set architecture computing (RISC) core, a complex instruction set architecture computing (CISC) core, a very long instruction word (VLIW) core, or a hybrid or alternative core type. As yet another option, the core 1190 may be a special-purpose core, such as, for example, a network or communication core, compression engine, coprocessor core, general purpose computing graphics processing unit (GPGPU) core, graphics core, or the like.

The front end unit circuitry 1130 may include branch prediction circuitry 1132 coupled to an instruction cache circuitry 1134, which is coupled to an instruction translation lookaside buffer (TLB) 1136, which is coupled to instruction fetch circuitry 1138, which is coupled to decode circuitry 1140. In one example, the instruction cache circuitry 1134 is included in the memory unit circuitry 1170 rather than the front-end circuitry 1130. The decode circuitry 1140 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1140 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1140 may be implemented using various different mechanisms. Examples of suitable mechanisms include, but are not limited to, look-up tables, hardware implementations, programmable logic arrays (PLAs), microcode read only memories (ROMs), etc. In one example, the core 1190 includes a microcode ROM (not shown) or other medium that stores microcode for certain macroinstructions (e.g., in decode circuitry 1140 or otherwise within the front end circuitry 1130). In one example, the decode circuitry 1140 includes a micro-operation (micro-op) or operation cache (not shown) to hold/cache decoded operations, micro-tags, or micro-operations generated during the decode or other stages of the processor pipeline 1100. The decode circuitry 1140 may be coupled to rename/allocator unit circuitry 1152 in the execution engine circuitry 1150.

The execution engine circuitry 1150 includes the rename/allocator unit circuitry 1152 coupled to a retirement unit circuitry 1154 and a set of one or more scheduler(s) circuitry 1156. The scheduler(s) circuitry 1156 represents any number of different schedulers, including reservations stations, central instruction window, etc. In some examples, the scheduler(s) circuitry 1156 can include arithmetic logic unit (ALU) scheduler/scheduling circuitry, ALU queues, arithmetic generation unit (AGU) scheduler/scheduling circuitry, AGU queues, etc. The scheduler(s) circuitry 1156 is coupled to the physical register file(s) circuitry 1158. Each of the physical register file(s) circuitry 1158 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1158 includes vector registers unit circuitry, writemask registers unit circuitry, and scalar register unit circuitry. These register units may provide architectural vector registers, vector mask registers, general-purpose registers, etc. The physical register file(s) circuitry 1158 is coupled to the retirement unit circuitry 1154 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1154 and the physical register file(s) circuitry 1158 are coupled to the execution cluster(s) 1160. The execution cluster(s) 1160 includes a set of one or more execution unit(s) circuitry 1162 and a set of one or more memory access circuitry 1164. The execution unit(s) circuitry 1162 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1156, physical register file(s) circuitry 1158, and execution cluster(s) 1160 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1164). It should also be understood that where separate pipelines are used, one or more of these pipelines may be out-of-order issue/execution and the rest in-order.

In some examples, the execution engine unit circuitry 1150 may perform load store unit (LSU) address/data pipelining to an Advanced Microcontroller Bus (AMB) interface (not shown), and address phase and writeback, data phase load, store, and branches.

The set of memory access circuitry 1164 is coupled to the memory unit circuitry 1170, which includes data TLB circuitry 1172 coupled to a data cache circuitry 1174 coupled to a level 2 (L2) cache circuitry 1176. In one exemplary example, the memory access circuitry 1164 may include a load unit circuitry, a store address unit circuit, and a store data unit circuitry, each of which is coupled to the data TLB circuitry 1172 in the memory unit circuitry 1170. The instruction cache circuitry 1134 is further coupled to the level 2 (L2) cache circuitry 1176 in the memory unit circuitry 1170. In one example, the instruction cache 1134 and the data cache 1174 are combined into a single instruction and data cache (not shown) in L2 cache circuitry 1176, a level 3 (L3) cache circuitry (not shown), and/or main memory. The L2 cache circuitry 1176 is coupled to one or more other levels of cache and eventually to a main memory.

The core 1190 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1190 includes logic to support a packed data instruction set architecture extension (e.g., AVX1, AVX2), thereby allowing the operations used by many multimedia applications to be performed using packed data.

The description herein includes numerous details to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Techniques and architectures for providing access to a shared resource of a computation circuit are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

In one or more first embodiments, a device comprises first circuitry to determine a size of a pool of one or more processor circuits which each correspond to a respective current request to access a resource of a computation circuit, second circuitry coupled to the first circuitry, the second circuitry to detect a first condition wherein a first request to access the resource is pending, wherein the first request is on behalf of a first pool member, increase a first credit amount, based on the first condition, at a first rate which is based on the size, wherein the first credit amount corresponds to the first pool member, detect a second condition wherein a second request to access the computation circuit resource is being serviced, wherein the second request is on behalf of a second pool member, decrease a second credit amount at a second rate based on the second condition, wherein the second credit amount corresponds to the second pool member, third circuitry to perform a selection of the first pool member based on the first credit amount and the second credit amount, and fourth circuitry to assign a first task to the computation circuit resource, on behalf of the first pool member, based on the selection.

In one or more second embodiments, further to the first embodiment, the second rate is independent of the size of the pool.

In one or more third embodiments, further to the first embodiment or the second embodiment, the second circuitry is further to increase the first credit amount and the second credit amount each at the first rate while both the first request and the second request are pending.

In one or more fourth embodiments, further to any of the first through third embodiments, the first circuitry is further to detect an increase of the size of the pool, and based on the first condition, the second circuitry is to increase the first credit amount at a third rate which is less than the first rate, wherein the third rate is based on the size of the pool after the increase.

In one or more fifth embodiments, further to any of the first through fourth embodiments, the first circuitry is further to detect a decrease of the size of the pool, and based on the first condition, the second circuitry is to increase the first credit amount at a third rate which is greater than the first rate, wherein the third rate is based on the size of the pool after the decrease.

In one or more sixth embodiments, further to any of the first through fifth embodiments, the computational circuit comprises one of a co-processor, an accelerator, or a graphics processor unit.

In one or more seventh embodiments, further to any of the first through sixth embodiments, an allocation of access to the resource according to a credit-based allocation scheme is to comprise the selection of the first pool member, the third circuitry is further to identify a prioritization level as corresponding to a third request from a third pool member, and based on the prioritization level, the third circuitry is to perform a transition from the credit-based allocation scheme to a priority-based allocation scheme.

In one or more eighth embodiments, further to the seventh embodiment, the third circuitry is further to detect a completion of a prioritized request to access the resource, and based on the completion, the third circuitry is further to perform another transition from the priority-based allocation scheme to the credit-based allocation scheme.

In one or more ninth embodiments, further to the seventh embodiment, after the transition, the second circuitry is to increase a third credit amount at a rate which is based on the prioritization level, wherein the third credit amount corresponds to the third pool member.

In one or more tenth embodiments, a method comprises determining a size of a pool of one or more processor circuits which each correspond to a respective current request to access a resource of a computation circuit, detecting a first condition wherein a first request to access the resource is pending, wherein the first request is on behalf of a first pool member, based on the first condition, increasing a first credit amount at a first rate which is based on the size, wherein the first credit amount corresponds to the first pool member, detecting a second condition wherein a second request to access the computation circuit resource is being serviced, wherein the second request is on behalf of a second pool member, based on the second condition, decreasing a second credit amount at a second rate, wherein the second credit amount corresponds to the second pool member, performing a selection of the first pool member based on the first credit amount and the second credit amount, and assigning a first task to the computation circuit resource, on behalf of the first pool member, based on the selection.

In one or more eleventh embodiments, further to the tenth embodiment, the second rate is independent of the size of the pool.

In one or more twelfth embodiments, further to the tenth embodiment or the eleventh embodiment, the method further comprises increasing the first credit amount and the second credit amount each at the first rate while both the first request and the second request are pending.

In one or more thirteenth embodiments, further to any of the tenth through twelfth embodiments, the method further comprises detecting an increase of the size of the pool, and based on the first condition, increasing the first credit amount at a third rate which is less than the first rate, wherein the third rate is based on the size of the pool after the increase.

In one or more fourteenth embodiments, further to any of the tenth through thirteenth embodiments, the method further comprises detecting a decrease of the size of the pool, and based on the first condition, increasing the first credit amount at a third rate which is greater than the first rate, wherein the third rate is based on the size of the pool after the decrease.

In one or more fifteenth embodiments, further to any of the tenth through fourteenth embodiments, the computational circuit comprises one of a co-processor, an accelerator, or a graphics processor unit.

In one or more sixteenth embodiments, further to any of the tenth through fifteenth embodiments, an allocation of access to the resource according to a credit-based allocation scheme comprises the selection of the first pool member, and the method further comprises identifying a prioritization level as corresponding to a third request from a third pool member, and based on the prioritization level, performing a transition from the credit-based allocation scheme to a priority-based allocation scheme.

In one or more seventeenth embodiments, further to the sixteenth embodiment, the method further comprises detecting a completion of a prioritized request to access the resource, and based on the completion, performing another transition from the priority-based allocation scheme to the credit-based allocation scheme.

In one or more eighteenth embodiments, further to the sixteenth embodiment, after the transition, an accumulation of credit by the third pool member is at a rate which is based on the prioritization level.

In one or more nineteenth embodiments, a system comprises multiple processor circuits, a computation circuit, first circuitry coupled to the multiple processor circuits and the computation circuit, the first circuitry to determine a size of a pool of one or more processor circuits which each correspond to a respective current request to access a resource of the computation circuit, and second circuitry coupled to the first circuitry, the second circuitry to detect a first condition wherein a first request to access the resource is pending, wherein the first request is on behalf of a first pool member, increase a first credit amount, based on the first condition, at a first rate which is based on the size, wherein the first credit amount corresponds to the first pool member, detect a second condition wherein a second request to access the computation circuit resource is being serviced, wherein the second request is on behalf of a second pool member, decrease a second credit amount at a second rate based on the second condition, wherein the second credit amount corresponds to the second pool member.

In one or more twentieth embodiments, further to the nineteenth embodiment, the multiple processor circuits each comprise a respective one or more processor cores.

In one or more twenty-first embodiments, further to the nineteenth embodiment or the twentieth embodiment, the second rate is independent of the size of the pool.

In one or more twenty-second embodiments, further to any of the nineteenth through twenty-first embodiments, the second circuitry is further to increase the first credit amount and the second credit amount each at the first rate while both the first request and the second request are pending.

In one or more twenty-third embodiments, further to any of the nineteenth through twenty-second embodiments, the first circuitry is further to detect an increase of the size of the pool, and based on the first condition, the second circuitry is to increase the first credit amount at a third rate which is less than the first rate, wherein the third rate is based on the size of the pool after the increase.

In one or more twenty-fourth embodiments, further to any of the nineteenth through twenty-third embodiments, the first circuitry is further to detect a decrease of the size of the pool, and based on the first condition, the second circuitry is to increase the first credit amount at a third rate which is greater than the first rate, wherein the third rate is based on the size of the pool after the decrease.

In one or more twenty-fifth embodiments, further to any of the nineteenth through twenty-fourth embodiments, the computational circuit comprises one of a co-processor, an accelerator, or a graphics processor unit.

In one or more twenty-sixth embodiments, further to any of the nineteenth through twenty-fifth embodiments, the system further comprises third circuitry to perform a selection of the first pool member based on the first credit amount and the second credit amount, and fourth circuitry to assign a first task to the computation circuit resource, on behalf of the first pool member, based on the selection.

In one or more twenty-seventh embodiments, further to the twenty-sixth embodiment, an allocation of access to the resource according to a credit-based allocation scheme is to comprise the selection of the first pool member, the third circuitry is further to identify a prioritization level as corresponding to a third request from a third pool member, and based on the prioritization level, the third circuitry is to perform a transition from the credit-based allocation scheme to a priority-based allocation scheme.

In one or more twenty-eighth embodiments, further to the twenty-seventh embodiment, the third circuitry is further to detect a completion of a prioritized request to access the resource, and based on the completion, the third circuitry is further to perform another transition from the priority-based allocation scheme to the credit-based allocation scheme.

In one or more twenty-ninth embodiments, further to the twenty-seventh embodiment, after the transition, the second circuitry is to increase a third credit amount at a rate which is based on the prioritization level, wherein the third credit amount corresponds to the third pool member.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A device comprising:

   first circuitry to determine a size of a pool of one or more processor circuits which each correspond to a respective current request to access a resource of a computation circuit;
   second circuitry coupled to the first circuitry, the second circuitry to:

   detect a first condition wherein a first request to access the resource is pending, wherein the first request is on behalf of a first pool member;
   increase a first credit amount, based on the first condition, at a first rate which is based on the size, wherein the first credit amount corresponds to the first pool member; detect a second condition wherein a second request to access the computation circuit resource is being serviced, wherein the second request is on behalf of a second pool member; decrease a second credit amount at a second rate based on the second condition, wherein the second credit amount corresponds to the second pool member;

third circuitry to perform a selection of the first pool member based on the first credit amount and the second credit amount; and fourth circuitry to assign a first task to the computation circuit resource, on behalf of the first pool member, based on the selection.

2. The device of claim 1, wherein the second rate is independent of the size of the pool.

3. The device of claim 1, wherein the second circuitry is further to increase the first credit amount and the second credit amount each at the first rate while both the first request and the second request are pending.

4. The device of claim 1, wherein:

the first circuitry is further to detect an increase of the size of the pool; and based on the first condition, the second circuitry is to increase the first credit amount at a third rate which is less than the first rate, wherein the third rate is based on the size of the pool after the increase.

5. The device of claim 1, wherein:

the first circuitry is further to detect a decrease of the size of the pool; and based on the first condition, the second circuitry is to increase the first credit amount at a third rate which is greater than the first rate, wherein the third rate is based on the size of the pool after the decrease.

6. The device of claim 1, wherein the computational circuit comprises one of a co-processor, an accelerator, or a graphics processor unit.

7. The device of claim 1, wherein:

an allocation of access to the resource according to a credit-based allocation scheme is to comprise the selection of the first pool member; the third circuitry is further to identify a prioritization level as corresponding to a third request from a third pool member; and based on the prioritization level, the third circuitry is to perform a transition from the credit-based allocation scheme to a priority-based allocation scheme.

8. The device of claim 7, wherein:

the third circuitry is further to detect a completion of a prioritized request to access the resource; and based on the completion, the third circuitry is further to perform another transition from the priority-based allocation scheme to the credit-based allocation scheme.

9. The device of claim 7, wherein, after the transition, the second circuitry is to increase a third credit amount at a rate which is based on the prioritization level, wherein the third credit amount corresponds to the third pool member.

10. A method comprising:

determining a size of a pool of one or more processor circuits which each correspond to a respective current request to access a resource of a computation circuit; detecting a first condition wherein a first request to access the resource is pending, wherein the first request is on behalf of a first pool member; based on the first condition, increasing a first credit amount at a first rate which is based on the size, wherein the first credit amount corresponds to the first pool member; detecting a second condition wherein a second request to access the computation circuit resource is being serviced, wherein the second request is on behalf of a second pool member; based on the second condition, decreasing a second credit amount at a second rate, wherein the second credit amount corresponds to the second pool member; performing a selection of the first pool member based on the first credit amount and the second credit amount; and assigning a first task to the computation circuit resource, on behalf of the first pool member, based on the selection.

11. The method of claim 10, wherein the second rate is independent of the size of the pool.

12. The method of claim 10, further comprising: increasing the first credit amount and the second credit amount each at the first rate while both the first request and the second request are pending.

**13.** The method of claim 10, further comprising:

> detecting an increase of the size of the pool; and
> based on the first condition, increasing the first credit amount at a third rate which is less than the first rate, wherein the third rate is based on the size of the pool after the increase.

**14.** The method of claim 10, wherein:

> an allocation of access to the resource according to a credit-based allocation scheme comprises the selection of the first pool member; and
> the method further comprises:
>
>> identifying a prioritization level as corresponding to a third request from a third pool member; and
>> based on the prioritization level, performing a transition from the credit-based allocation scheme to a priority-based allocation scheme.

**15.** Machine-readable storage including machine-readable instructions, when executed, to implement a method or realize a device as claimed in any preceding claim.

FIG. 1

200

**210**
Determine a current size of a processor circuit pool

**212**
Detect a first condition wherein a first request to access a computation circuit resource is pending, wherein the first request is on behalf of a first pool member

**214**
Based on the first condition, increase a first credit amount at a first rate which is based on the current size, wherein the first credit amount corresponds to the first pool member

**216**
Detect a second condition wherein a second request to access the computation circuit resource is being serviced, wherein the second request is on behalf of a second pool member

**218**
Based on the second condition, decrease a second credit amount at a second rate, wherein the second credit amount corresponds to the second pool member

**220**
Perform a selection of the first pool member based on the first credit amount and the second credit amount

**222**
Assign a first task to the computation circuit resource, on behalf of the first pool member, based on the selection

FIG. 2

300

**310**
Determine a current size N of
the processor circuit pool

**312**
Is N
a positive
number?

NO

YES

**314**
Begin a cycle

**316**
Identify a next pool member
to be under evaluation

**318**
Is computation circuit
access currently underway for
the pool member?

YES

**320**
Decrease the
credit amount
which corresponds
to the pool member
by K credit units

NO

**322**
Increase the credit
amount which
corresponds to the
pool member
by K/N credit

**324**
Have all
pool members been
evaluated in the
cycle?

NO

YES

**326**
End the cycle

**328**
Has
the pool size
changed?

NO

YES

NO

FIG. 3

FIG. 4

_500_

**510**

Is a
resource access
request currently
pending?

NO

YES

**512**

Identify a highest
credentialed request

NO

**522**

Has the
most recently
assigned task been
completed?

YES

**514**

Is a resource
access request currently
being serviced?

NO

YES

**516**

Is it the
highest credentialed
resource access
request?

YES

NO

**518**

Suspend the currently
assigned task

**520**

Assign a task to the
computation circuit
resource on behalf of the
highest credentialed
request

FIG. 5

FIG. 6

700

Is a resource access request currently pending? — 710

NO

YES

Is any pending request prioritized? — 712

YES

NO

Perform task assignment according to a priority-based scheme — 714

Perform task assignment according to a credit-based scheme — 716

FIG. 7

800

```
                              ┌─ 810
                            Is any
                         current resource
              NO ◄───── access request
                           prioritized?

                              │ YES
                              ▼  ┌─ 812
                         Identify a highest ◄──── NO
                         prioritized request

                              │
                              ▼  ┌─ 814
                          Is a resource
              NO ◄────── access request currently
                          being serviced?

                              │ YES
                              ▼  ┌─ 816
                            Is it the
                        highest prioritized ──── YES ──►
                         resource access
                             request?

                              │ NO
                              ▼  ┌─ 818
                       Suspend the currently
                          assigned task

                              │
                              ▼  ┌─ 820
                        Assign a task to the
                       computation circuit
                       resource on behalf of the
                       highest prioritized request
```

End

YES

┌─ 822

Has the
most recently
assigned task been
completed?

FIG. 8

FIG. 9

PROCESSOR 1000

| SPECIAL PURPOSE LOGIC 1008 | CORE 1002A<br><br>CACHE UNIT(S) 1004A | • • • | CORE 1002N<br><br>CACHE UNIT(S) 1004N | SYSTEM AGENT UNIT 1010 | INTERCONNECT CONTROLLER UNIT(S) 1016 |
| | SHARED CACHE UNIT(S) 1006 | | | INTEGRATED MEMORY CONTROLLER UNIT(S) 1014 | |
| | INTERCONNECT NETWORK 1012 | | | | |

FIG. 10

**FIG. 11A**

PIPELINE 1100

| FETCH 1102 | LENGTH DECODING 1104 | DECODE 1106 | ALLOC. 1108 | RENAMING 1110 | SCHEDULE 1112 | REGISTER READ/ MEMORY READ 1114 | EXECUTE STAGE 1116 | WRITE BACK/ MEMORY WRITE 1118 | EXCEPTION HANDLING 1122 | COMMIT 1124 |

**FIG. 11B**

CORE 1190

FRONT END 1130

BRANCH PREDICTION 1132

INSTRUCTION CACHE 1134

INSTRUCTION TLB 1136

INSTRUCTION FETCH 1138

DECODE CIRCUITRY 1140

EXECUTION ENGINE 1150

RENAME / ALLOCATOR UNIT 1152

RETIREMENT UNIT 1154

SCHEDULER(S) 1156

PHYSICAL REGISTER FILE(S) 1158

EXECUTION CLUSTER(S) 1160

EXECUTION UNIT(S) CIRCUITRY 1162

MEMORY ACCESS CIRCUITRY 1164

MEMORY UNIT 1170

DATA TLB 1172

DATA CACHE 1174

L2 CACHE 1176

**EP 4 579 458 A1**

Europäisches
Patentamt
European
Patent Office
Office européen
des brevets

# EUROPEAN SEARCH REPORT

Application Number

EP 24 21 5352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/280119 A1 (KARAMANOLIS CHRISTOS [US] ET AL) 14 December 2006 (2006-12-14) * abstract * * paragraphs [0002] - [0023] * * paragraphs [0036] - [0049] * ----- | 1-15 | INV. G06F9/50 |
| A | US 2015/007189 A1 (DE GRUIJL ROBERT [US] ET AL) 1 January 2015 (2015-01-01) * the whole document * ----- | 1-15 | |
| A | US 2008/228977 A1 (DIGNUM MARCELINO M [US] ET AL) 18 September 2008 (2008-09-18) * figures 2-4 * ----- | 1-15 | |

TECHNICAL FIELDS
SEARCHED       (IPC)

G06F

The present search report has been drawn up for all claims

| Place of search | Date of completion of the search | Examiner |
|---|---|---|
| The Hague | 7 April 2025 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 21 5352

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | Publication date | Patent family member(s) | | Publication date |
|---|---|---|---|---|
| US 2006280119 A1 | 14-12-2006 | NONE | | |
| US 2015007189 A1 | 01-01-2015 | CN | 105247825 A | 13-01-2016 |
| | | EP | 3014827 A1 | 04-05-2016 |
| | | JP | 2016521936 A | 25-07-2016 |
| | | KR | 20160004365 A | 12-01-2016 |
| | | US | 2015007189 A1 | 01-01-2015 |
| | | WO | 2014209407 A1 | 31-12-2014 |
| US 2008228977 A1 | 18-09-2008 | NONE | | |

EPO FORM P0459

For more details about this annex : see Official Journal of the European Patent Office, No. 12/82